# EUROPEAN PATENT APPLICATION

(11) **EP 4 451 377 A1**
(43) Date of publication of application: **23.10.2024**
(21) Application number: 22938994.5
(22) Date of filing: 27.04.2022
(51) Int. Cl.: H01M 4/36, H01M 4/38, H01M 4/583, H01M 4/133, H01M 4/134, H01M 10/0525

(54) **SECONDARY BATTERY, BATTERY MODULE, BATTERY PACK AND ELECTRIC DEVICE**

(71) Applicant: Contemporary Amperex Technology (Hong Kong) Limited, Central, Central And Western District (HK)
(72) Inventor: WANG, Yuwen, Ningde, Fujian 352100 (CN); WU, Yiyang, Ningde, Fujian 352100 (CN); YE, Yonghuang, Ningde, Fujian 352100 (CN); WU, Baozhen, Ningde, Fujian 352100 (CN); YOU, Xingyan, Ningde, Fujian 352100 (CN)
(74) Representative: Ziebig Hengelhaupt Intellectual Property Attorneys Patentanwaltskanzlei PartGmbB
(86) International application number: PCT/CN2022/089563
(87) International publication number: WO 2023/206140

(57) **Abstract**

A secondary battery (5) is disclosed, including: a positive electrode plate, a negative electrode plate, and a separator. The separator is disposed between the positive electrode plate and the negative electrode plate. The negative electrode plate includes a negative current collector and a negative active material layer disposed on at least one surface of the negative current collector. A negative active material in the negative active material layer includes graphite, amorphous carbon, and a non-carbon negative electrode material. The amorphous carbon includes one or more of hard carbon, soft carbon, or porous carbon. The non-carbon negative electrode material is a silicon-based negative electrode material and/or a tin-based negative electrode material.

## Description

### TECHNICAL FIELD

This application relates to the technical field of secondary batteries, and in particular, to a secondary battery, a battery module, a battery pack, and an electrical device.

### BACKGROUND

The description in the background section merely provides background information related to this application, but does not necessarily constitute related art.

With the rapid development of new energy vehicles, customers and the market are imposing increasingly higher requirements on the energy density of lithium-ion batteries. Especially, in order to compete with the oil-fueled vehicle market, the energy density urgently needs to be further improved.

However, batteries with a high energy density currently available on the market are usually inferior in the charging capabilities, and are prone to problems such as cycle capacity fading during a fast charge, and can hardly achieve a long service life.

### SUMMARY

In view of the above problems, this application provides a secondary battery, a battery module, a battery pack, and an electrical device to increase the energy density of the battery, and at the same time, endow the battery with fast-charge performance and a relatively long service life.

According to a first aspect, this application provides a secondary battery, including:
a positive electrode plate;
a negative electrode plate; and
a separator, disposed between the positive electrode plate and the negative electrode plate.

The negative electrode plate includes a negative current collector and a negative active material layer disposed on at least one surface of the negative current collector. A negative active material in the negative active material layer includes graphite, amorphous carbon, and a non-carbon negative electrode material. The amorphous carbon includes one or more of hard carbon, soft carbon, or porous carbon. The non-carbon negative electrode material is a silicon-based negative electrode material and/or a tin-based negative electrode material.

In the technical solutions in some embodiments of this application, because the lithiation potential of the amorphous carbon is high at an early stage, lithium is preferentially inserted into the amorphous carbon. In addition, the expansion rebound rate of the amorphous carbon is low. Therefore, the amorphous carbon is used in a high-energy-density system containing a non-carbon negative electrode such as a silicon- or tin-based negative electrode, supplemented by a graphite material. The three constituents coordinate with each other synergistically to not only effectively improve the charging capabilities and cycle performance of the high-energy-density system containing a silicon- or tin-based negative electrode, but also avoid fast-charge-induced breakage of particles in the surface of the silicon- or tin-based negative electrode material and fading of the lifespan of the battery, thereby effectively improving the overall performance of high-energy-density system.

In some embodiments, in the negative active material, a mass percent of the graphite is x, a mass percent of the amorphous carbon is y, a mass percent of the non-carbon negative electrode material is z, and x, y, and z satisfy the following relationship: 0.062x + 0.263y ≤ z ≤ 1.18x + 5y.

In some embodiments, x, y, and z satisfy the following relationship: 0.08x + 0.4y ≤ z ≤ 1x + 4y.

In some embodiments, x, y, and z satisfy the following relationship: x + y + z = 1.

In some embodiments, a value range of y is 5% to 50%.

In the technical solutions in these embodiments of this application, the dosages of the graphite, amorphous carbon, and non-carbon negative electrode material fall within an appropriate range. Such value ranges are crucial to further improving the fast-charge performance, cycle performance, and lifespan of the high-energy-density system. With the parameter values falling within the preset range, the several materials can synergize, and the advantages of different materials are exerted. At the same time, the impact of the disadvantage of each material on the entire system is minimized. Different materials complement each other with their respective advantages, thereby achieving balance and maximization of performance.

In some embodiments, a lithiation capacity of the amorphous carbon in a first charge stage is C₁, a lithiation capacity of the negative active material in an entire charge process is Cₛᵤₘ, and a value range of a C₁/Cₛᵤₘ ratio is 5% to 50%.

the first charge stage means a charge stage in which a lithiation potential of the amorphous carbon is greater than a lithiation potential of the graphite, and in which the lithiation potential of the amorphous carbon is greater than a lithiation potential of the non-carbon negative electrode material.

In some embodiments, a value range of the C₁/Cₛᵤₘ ratio is 10% to 35%.

The voltage of the amorphous carbon material varies greatly in a charge process. At the early stage, the amorphous carbon material exhibits a lithiation voltage window in which the lithiation potential is constantly higher than that of the non-carbon negative electrode material and the graphite material. At the late stage, the amorphous carbon material exhibits a relatively wide lithiation voltage window in which the lithiation potential is lower than that of the non-carbon negative electrode material and the graphite material and close to 0 V. In the charge process, lithium is preferentially inserted into a material with a relatively high lithiation potential. Therefore, by controlling the ratio of the lithiation capacity of the amorphous carbon in the first charge stage to the lithiation capacity of the negative electrode in the entire charge process to fall within a specified range, this application minimizes the expansion of the negative electrode material at the early stage in which the charging is performed at a high C-rate, but without causing a significant adverse effect on the system due to the low energy density and low first-cycle Coulombic efficiency of the amorphous carbon material.

In some embodiments, the hard carbon includes one or more of resin carbon or carbon black. The hard carbon is a type of pyrolyzed carbon of a polymer, and is hardly graphitizable even at a high temperature of 2500 °C or above. The hard carbon is structurally stable, exhibits a long cycle life and high safety performance. The hard carbon used as a source of the amorphous carbon is more conducive to improving the cycle performance and lifespan of the negative electrode.

In some embodiments, the soft carbon includes one or more of mesocarbon microbeads, coke, or carbon fibers. The soft carbon is a type of amorphous carbon that can be graphitized at a temperature of 2500 °C or above, and exhibits a relatively low and steady charge-and-discharge potential plateau. The soft carbon used as a source of the amorphous carbon is more conducive to improving the charge and discharge capacity and efficiency of the negative electrode.

In some embodiments, the silicon-based negative electrode material includes one or more of elemental silicon, a silicon-oxygen compound, a silicon-nitrogen composite, or silicon alloy.

In some embodiments, a volume median diameter D_{V50} of the graphite falls within a range of 5 µm to 25 µm.

In some embodiments, a graphitization degree of the graphite is 88% to 99%. The graphitization degree means a degree to which carbon atoms form a close-packed hexagonal graphite crystal structure. The closer the lattice dimensions of the crystal structure is to the ideal lattice parameters of graphite, the higher the graphitization degree. By controlling the graphitization degree of the graphite material to fall within a specified range, this application endows the negative electrode material with higher performance, so that the battery made of the negative active material of this application exhibits a higher capacity.

In some embodiments, a volume median diameter D_{V50} of the amorphous carbon falls within a range of 2 µm to 10 µm.

In some embodiments, a volume median diameter D_{V50} of the non-carbon negative electrode material falls within a range of 0.05 µm to 20 µm.

By controlling the particle diameters of the above constituents to fall within an appropriate range, the slurry made from the negative active material of this application is more dispersive and less prone to agglomerate. The resultant negative electrode plate is more structurally uniform and of a more appropriate porosity, and in turn, superior in performance.

In some embodiments, a mass percent of the negative active material in the negative active material layer is 92% to 99%. The mass percent of the negative active material in the negative active material layer is specially designed according to a negative active material formula of this application. The mass percent controlled to fall within an appropriate range can maximally exert the advantages of the negative active material, and in turn, endow the negative electrode plate with higher performance and reduce the production cost.

In some embodiments, a thickness of the negative active material layer is 30 µm to 100 µm.The thickness means a thickness of a single layer of negative active material layer formed on one surface of the current collector, and is also set based on the negative active material formula of this application. The thickness falling within an appropriate range makes the characteristic thickness of the active material layer account for a higher proportion, and enables higher performance of the active material layer.

In some embodiments, a compaction density of the negative electrode plate is 1 g/cm³ to 1.7 g/cm³. According to the negative active material formula of this application, an appropriate compaction density can well balance the energy density, charge performance, and safety of the electrode plate.

In some embodiments, a porosity of the negative electrode plate is 20% to 70%.

In some embodiments, the porosity of the negative electrode plate is 25% to 60%. By controlling the porosity of the negative electrode plate to fall within an appropriate range, this application ensures high charging capabilities without unduly reducing the energy density of the system.

In some embodiments, a full-charge expansion rebound rate of the negative electrode plate is 20% to 60%. The negative electrode plate of this application exhibits a high energy density. At the same time, the full-charge expansion rebound rate of the negative electrode plate is far lower than the full-charge expansion rebound rate (≥100%) of a high-energy-density negative electrode material such as a silicon- or tin-based negative electrode material, thereby effectively avoiding breakage of particles caused by a mismatch between the expansion stress of an outer layer of particles of the material and the expansion stress inside the particles in a fast-charge process, and in turn, avoiding the need to repair the solid electrolyte interface (solid electrolyte interface, SEI) film, and avoiding loss of active lithium. Therefore, in a fast-charge process, the capacity fading during cycling is slower and the lifespan is longer than a conventional high-energy-density system.

In some embodiments, an end-of-discharge anode potential of the negative electrode plate is greater than or equal to 0.6 V, and a discharge curve includes 2 or more voltage plateaus. The negative electrode plate prepared in this application exhibits a relatively high end-of-discharge anode potential, thereby thoroughly exerting the capacity of the negative electrode during discharge. The discharge curve containing more than two voltage plateaus enables the amorphous carbon materials to be lithiated sequentially in preset order in a case of charging at a high C-rate, thereby exerting the advantages of the composite negative active material of this application, and contributing to achieving a high energy density, excellent cycle performance, and a long service life concurrently.

In some embodiments, the positive electrode plate includes a positive active material and a lithium supplement additive. The positive active material includes one or more of lithium nickel cobalt manganese oxide, lithium manganese oxide, lithium iron phosphate, lithium-rich lithium manganese oxide, or lithium cobalt oxide. The lithium supplement additive includes one or more of Li_{7/3}Ti_{5/3}O₄, Li_{2.3}Mo₆S_{7.7}, Li₂NiO₂, Li₂CuO₂, Li₆CoO₄, Li5FeO₄, Li₆MnO₄, Li₂MoO₃, Li₃N, Li₂O, LiOH, or Li₂CO₃. The negative electrode plate of this application can be used together with a variety of common positive active materials, and is widely applicable, and can meet various different needs of the market. The dosage of an appropriate type of lithium supplement additive further enables a higher first-cycle Coulombic efficiency of the battery prepared from the negative active material of this application.

In some embodiments, in the electrode assembly, a ratio of a coating amount of a negative electrode material per unit area to a coating amount of a positive electrode material per unit area is denoted as N/P, and a value range of the N/P ratio is 0.99 to 1.2. The N/P ratio falling within the specified range enables the advantages of the negative electrode plate of this application to be exerted more prominently, and enables production of a higher-performance electrode assembly using the negative electrode plate together with the positive electrode plate.

According to a second aspect, this application provides a battery module. The battery module includes the secondary battery disclosed in the preceding embodiment.

According to a third aspect, this application provides a battery pack. The battery pack includes the battery module disclosed in the preceding embodiment.

According to a fourth aspect, this application provides an electrical device. The electrical device includes one or more of the secondary battery disclosed in the preceding embodiment, the battery module disclosed in the preceding embodiment, or the battery pack disclosed in the preceding embodiment.

The details of one or more embodiments of this application are set forth in the drawings and description below. Other features, objectives, and advantages of this application will become evident in the specification, drawings, and claims.

### BRIEF DESCRIPTION OF DRAWINGS

In order to more clearly describe and illustrate some embodiments or examples of this application disclosed herein, reference may be made to one or more drawings. Additional details or examples used to describe the drawings are not to be considered as any limitation on the scope of any one of the application disclosed herein, an embodiment or example currently being described, or a preferred implementation of this application currently being understood. In all the drawings, the same reference numeral represents the same component. In the drawings:
FIG. 1 is a schematic diagram of a secondary battery according to an embodiment of this application;
FIG. 2 is an exploded view of the secondary battery shown in FIG. 1 according to an embodiment of this application;
FIG. 3 is a schematic diagram of a battery module according to an embodiment of this application;
FIG. 4 is a schematic diagram of a battery pack according to an embodiment of this application;
FIG. 5 is an exploded view of the battery pack shown in FIG. 4 according to an embodiment of this application; and
FIG. 6 is a schematic diagram of an electrical device that uses a secondary battery as a power supply according to an embodiment of this application; and
FIG. 7 shows an end-of-discharge anode potential and a discharge curve of a negative electrode plate in a full cell prepared in Embodiment 1 of this application.

### List of reference numerals:

1. battery pack; 2. upper box; 3. lower box; 4. battery module; 5. secondary battery; 51. housing; 52. electrode assembly; 53. top cap assembly.

### DETAILED DESCRIPTION OF EMBODIMENTS

To make the objectives, technical solutions, and advantages of this application clearer, the following describes this application in further detail with reference to drawings and embodiments. Understandably, the specific embodiments described herein are merely intended to explain this application, but are not intended to limit this application.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein includes any and all combinations of one or more relevant items enumerated.

The following describes and discloses in detail some embodiments of a negative active material, a negative electrode plate and a preparation method thereof, a secondary battery, a battery module, a battery pack, and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified herein, the term "or" is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

Due to the practical shortage of petroleum resources and the deep-rooted concept of sustainable development, participants in many fields are committed to finding new energy sources suitable in the corresponding field to replace conventional petroleum. As a major consumer of petrochemical products, oil-fueled vehicles still dominate the entire motor vehicle industry by virtue of mature technology, cost-effective components, and a long cruising range. Therefore, in order to make new energy vehicles such as electric vehicles economically competitive against oil-fueled vehicles, it is urgent to develop a lithium-ion battery that is superior in energy density, service life, charging capabilities, and cycle performance.

Graphite is a widely used negative electrode material. However, the theoretical gravimetric capacity of graphite is as low as 372 mAh/g, greatly limiting the energy density. In order to further increase the energy density, a negative electrode material of a higher energy density such as a silicon- or tin-based negative electrode material needs to be introduced to improve the energy density of the graphite negative electrode material. Especially, the silicon-based negative electrode material is currently the most promising next-generation high-energy-density negative electrode material. However, the current silicon- or tin-based negative electrode material incurs the problem of a high expansion rebound rate, thereby resulting in breakage of relatively large particles of the material on the surface during cycling, causing persistent repair of the solid electrolyte interface (solid electrolyte interface, SEI) film on the surface, and in turn, resulting in loss of active lithium and rapid capacity fading. At the same time, the silicon- or tin-based negative electrode material exhibits a higher lithiation potential than graphite. Therefore, in a fast-charge test, the silicon- or tin-based negative electrode material is lithiated preferentially at a high C-rate. However, the conductivity of the silicon- or tin-based material is very low. Therefore, lithium is inserted rather nonuniformly inside the material, and is mostly concentrated on the surface of the particles, thereby resulting in a mismatch between the expansion stress of the outer layer of the particles and the expansion stress inside the particles. The mismatch aggravates breakage of the particles on the surface of the silicon- or tin-based material during fast charge, and in turn, leads to severer surface SEI repair and loss of active lithium. Consequently, the cycle capacity fading of the silicon- or tin-based chemical system in a fast-charge process is faster than the cycle capacity fading in a full-cycle charge process. In short, the overall cycle performance and storage performance of the current silicon-based material are relatively low, and can hardly meet the current longevity requirement. Therefore, it is particularly urgent to improve the cycle performance of a high-energy-density system such as a silicon- or tin-based negative electrode, especially the cycle performance during fast charge.

Based on the above considerations, according to a first aspect, this application provides a secondary battery, including:
a positive electrode plate;
a negative electrode plate; and
a separator, disposed between the positive electrode plate and the negative electrode plate.

The negative electrode plate includes a negative current collector and a negative active material layer disposed on at least one surface of the negative current collector. A negative active material in the negative active material layer includes graphite, amorphous carbon, and a non-carbon negative electrode material. The amorphous carbon may include one or more of hard carbon, soft carbon, or porous carbon. The non-carbon negative electrode material may be a silicon-based negative electrode material and/or a tin-based negative electrode material.

In the technical solutions in some embodiments of this application, because the lithiation potential of the amorphous carbon is high at an early stage, lithium is preferentially inserted into the amorphous carbon. In addition, the expansion rebound rate of the amorphous carbon is low. Therefore, the amorphous carbon is used in a high-energy-density system containing a non-carbon negative electrode such as a silicon- or tin-based negative electrode, supplemented by a graphite material. The three constituents coordinate with each other synergistically to not only effectively improve the charging capabilities and cycle performance of the high-energy-density system containing a silicon- or tin-based negative electrode, but also avoid fast-charge-induced breakage of particles in the surface of the silicon- or tin-based negative electrode material and fading of the lifespan of the battery, thereby effectively improving the overall performance of high-energy-density system.

In some embodiments, in the negative active material, a mass percent of the graphite is x, a mass percent of the amorphous carbon is y, a mass percent of the non-carbon negative electrode material is z, and x, y, and z satisfy the following relationship: 0.062x + 0.263y ≤ z ≤ 1.18x + 5y.

In some embodiments, x, y, and z satisfy the following relationship: 0.08x + 0.4y ≤ z ≤ 1x + 4y.

In some embodiments, x, y, and z satisfy the following relationship: x + y + z = 1.

In some embodiments, a value range of y is 5% to 50%. In some embodiments, the value range of y may be 12% to 38%, for example. The value range of y may also be, for example, 10%, 15%, 20%, 25%, 30%, 35%, 40%, or 45%.

In the technical solutions in these embodiments of this application, the dosages of the graphite, amorphous carbon, and non-carbon negative electrode material fall within an appropriate range. Such value ranges are crucial to further improving the fast-charge performance, cycle performance, and lifespan of the high-energy-density system. With the parameter values falling within the preset range, the several materials can synergize, and the advantages of different materials are exerted. At the same time, the impact of the disadvantage of each material on the entire system is minimized. Different materials complement each other with their respective advantages, thereby achieving balance and maximization of performance.

In some embodiments, a lithiation capacity of the amorphous carbon in a first charge stage is C₁, a lithiation capacity of the negative active material in an entire charge process is Cₛᵤₘ, and a value range of a C₁/Cₛᵤₘ ratio is 5% to 50%.

The first charge stage means a charge stage in which a lithiation potential of the amorphous carbon is greater than a lithiation potential of the graphite, and in which the lithiation potential of the amorphous carbon is greater than a lithiation potential of the non-carbon negative electrode material.

In some embodiments, preferably, a value range of the C₁/Cₛᵤₘ ratio is 10% to 35%. The C₁/Cₛᵤₘ ratio controlled within the specified range endows the battery with higher fast-charge performance, greater longevity, and a lower full-charge expansion rebound rate.

In some embodiments, the value of the C₁/Cₛᵤₘ ratio may be, for example, 8%, 12%, 16%, 20%, 24%, 28%, 32%, 36%, 40%, 44%, or 48%.

The voltage of the amorphous carbon material varies greatly in a charge process. At the early stage, the amorphous carbon material exhibits a lithiation voltage window in which the lithiation potential is constantly higher than that of the non-carbon negative electrode material and the graphite material. At the late stage, the amorphous carbon material exhibits a relatively wide lithiation voltage window in which the lithiation potential is lower than that of the non-carbon negative electrode material and the graphite material and close to 0 V. In the charge process, lithium is preferentially inserted into a material with a relatively high lithiation potential. Therefore, by controlling the ratio of the lithiation capacity of the amorphous carbon in the first charge stage to the lithiation capacity of the negative electrode in the entire charge process to fall within a specified range, this application minimizes the expansion of the negative electrode material at the early stage in which the charging is performed at a high C-rate, but without causing a significant adverse effect on the system due to the low energy density and low first-cycle Coulombic efficiency of the amorphous carbon material.

In some embodiments, the hard carbon includes one or more of resin carbon or carbon black. The hard carbon is a type of pyrolyzed carbon of a polymer, and is hardly graphitizable even at a temperature of 2500 °C or above. The hard carbon is structurally stable, exhibits a long cycle life and high safety performance. The hard carbon used as a source of the amorphous carbon is more conducive to improving the cycle performance and lifespan of the negative electrode.

In some embodiments, the soft carbon includes one or more of mesocarbon microbeads, coke, or carbon fibers. The soft carbon is a type of amorphous carbon that can be graphitized at a high temperature of 2500 °C or above, and exhibits a relatively low and steady charge-and-discharge potential plateau. The soft carbon used as a source of the amorphous carbon is more conducive to improving the charge and discharge capacity and efficiency of the negative electrode.

In some embodiments, the silicon-based negative electrode material includes one or more of elemental silicon, a silicon-oxygen compound, a silicon-nitrogen composite, or silicon alloy.

In some embodiments, a volume median diameter D_{V50} of the graphite falls within a range of 5 µm to 25 µm.D_{V50} means a particle diameter at which 50% of the cumulative volume distribution is reached in a volume-based particle size distribution curve. The volume median diameter D_{V50} of graphite may also be, for example, 10 µm, 15 µm, or 20 µm.

In some embodiments, a graphitization degree of the graphite is 88% to 99%. The graphitization degree means a degree to which carbon atoms form a close-packed hexagonal graphite crystal structure. The closer the lattice dimensions of the crystal structure is to the ideal lattice parameters of graphite, the higher the graphitization degree. By controlling the graphitization degree of the graphite material to fall within a specified range, this application endows the negative electrode material with higher performance, so that the battery made of the negative active material of this application exhibits a higher capacity. The graphitization degree of graphite may also be, for example, 90%, 92%, 94%, 96%, or 98%.

In some embodiments, the volume median diameter D_{V50} of the amorphous carbon falls within a range of 2 µm to 10 µm.The volume median diameter D_{V50} of the amorphous carbon may also be, for example, 4 µm, 6 µm, or 8 µm .

In some embodiments, a volume median diameter D_{V50} of the non-carbon negative electrode material falls within a range of 0.05 µm to 20 µm.The volume median diameter D_{V50} of the amorphous carbon may also be, for example, 2 µm, 4 µm, 6 µm, 8 µm, 10 µm, 12 µm, 14 µm, 16 µm, or 18 µm.

By controlling the particle diameters of the above constituents to fall within an appropriate range, the slurry made from the negative active material of this application is more dispersive and less prone to agglomerate. The resultant negative electrode plate is more structurally uniform and of a more appropriate porosity, and in turn, superior in performance.

The graphite, amorphous carbon, and non-carbon negative electrode material in this application may all be primary particles, secondary particles, or a mixture of primary particles or secondary particles.

In some embodiments, a mass percent of the negative active material in the negative active material layer is 92% to 99%. The mass percent of the negative active material in the negative active material layer is specially designed according to a negative active material formula of this application. The mass percent controlled to fall within an appropriate range can maximally exert the advantages of the negative active material, and in turn, endow the negative electrode plate with higher performance and reduce the production cost.

In some embodiments, the mass percent of the negative active material in the negative active material layer may also be, for example, 93%, 94%, 95%, 96%, 97%, or 98%.

In some embodiments, a thickness of the negative active material layer is 30 µm to 100 µm.The thickness means a thickness of a single layer of negative active material layer formed on one surface of the current collector, and is also set based on the negative active material formula of this application. The thickness falling within an appropriate range makes the characteristic thickness of the active material layer account for a higher proportion, and enables higher performance of the active material layer.

In some embodiments, the thickness of the negative active material layer may also be, for example, 52 µm to 88 µm, or may be 35 µm, 40 µm, 45 µm, 50 µm, 55 µm, 60 µm, 65 µm, or 70 µm, 75 µm, 80 µm, 85 µm, 90 µm, or 95 µm.

In some embodiments, a compaction density of the negative electrode plate is 1 g/cm³ to 1.7 g/cm³. According to the negative active material formula of this application, an appropriate compaction density can well balance the energy density, charge performance, and safety of the electrode plate.

In some embodiments, the compaction density of the negative electrode plate may be, for example, 1.28 g/cm³ to 1.48 g/cm³, or may be 1.05 g/cm³, 1.1 g/cm³, 1.15 g/cm³, 1.2 g/cm³, 1.25 g/cm³, 1.3 g/cm³, 1.35 g/cm³, 1.4 g/cm³, 1.45 g/cm³, 1.5 g/cm³, 1.55 g/cm³, 1.6 g/cm³, or 1.65 g/cm³.

In some embodiments, a porosity of the negative electrode plate is 20% to 70%.

In some embodiments, preferably, the porosity of the negative electrode plate is 25% to 60%.

In some embodiments, the porosity of the negative electrode plate may be, for example, 22%, 24%, 26%, 28%, 30%, 32%, 34%, 36%, 38%, 40%, 42%, 44%, 46%, 48%, 50%, 52%, 54%, 56%, or 58%. By controlling the porosity of the negative electrode plate to fall within an appropriate range, this application ensures high charging capabilities without unduly reducing the energy density of the system.

In some embodiments, a full-charge expansion rebound rate of the negative electrode plate is 20% to 60%. The full-charge expansion rebound rate of the negative electrode plate may be, for example, 22% to 48%, or may be 25%, 30%, 35%, 40%, 45%, 50%, or 55%. The negative electrode plate of this application exhibits a high energy density. At the same time, the full-charge expansion rebound rate of the negative electrode plate is far lower than the full-charge expansion rebound rate (≥100%) of a high-energy-density negative electrode material such as a silicon- or tin-based negative electrode material, thereby effectively avoiding breakage of particles caused by a mismatch between the expansion stress of an outer layer of particles of the material and the expansion stress inside the particles in a fast-charge process, and in turn, avoiding the need to repair the SEI film, and avoiding loss of active lithium. Therefore, in a fast-charge process, the capacity fading during cycling is slower and the lifespan is longer than a conventional high-energy-density system.

In some embodiments, an end-of-discharge anode potential of the negative electrode plate is greater than or equal to 0.6 V, and a discharge curve includes 2 or more voltage plateaus. Further, the end-of-discharge anode potential of the negative electrode plate is greater than or equal to 1.0 V. The negative electrode plate prepared in this application exhibits a relatively high end-of-discharge anode potential, thereby thoroughly exerting the capacity of the negative electrode during discharge. The discharge curve containing more than two voltage plateaus enables the amorphous carbon materials to be lithiated sequentially in preset order in a case of charging at a high C-rate, thereby exerting the advantages of the composite negative active material of this application, and contributing to achieving a high energy density, excellent cycle performance, and a long service life concurrently.

In some embodiments, the positive electrode plate includes a positive active material and a lithium supplement additive. The positive active material may include one or more of lithium nickel cobalt manganese oxide, lithium manganese oxide, lithium iron phosphate, lithium-rich lithium manganese oxide, or lithium cobalt oxide. The lithium supplement additive may include one or more of Li_{7/3}Ti_{5/3}O₄, Li_{2.3}Mo₆S_{7.7}, Li₂NiO₂, Li₂CuO₂, Li₆CoO₄, Li5FeO₄, Li₆MnO₄, Li₂MoO₃, Li₃N, Li₂O, LiOH, or Li₂CO₃. The negative electrode plate of this application can be used together with a variety of common positive active materials, and is widely applicable, and can meet various different needs of the market. The dosage of an appropriate type of lithium supplement additive further enables a higher first-cycle Coulombic efficiency of the battery prepared from the negative active material of this application.

In some embodiments, a ratio of a coating amount of a negative electrode material per unit area to a coating amount of a positive electrode material per unit area is denoted as N/P, and a value range of the N/P ratio is 0.99 to 1.2. The N/P ratio falling within the specified range enables the advantages of the negative electrode plate of this application to be exerted more prominently, and enables production of a higher-performance secondary battery using the negative electrode plate together with the positive electrode plate.

In some embodiments, the secondary battery further includes an electrolyte. The type of the electrolyte is not particularly limited in this application, and may be selected as required. For example, the electrolyte may be in a liquid state or gel state, or all solid state.

In some embodiments, a method for preparing the negative electrode plate includes the following steps:
Mixing the negative active material, a solvent, and optional auxiliary agents to form a negative electrode slurry; and applying the negative electrode slurry onto at least one surface of the negative current collector, and drying and pressing the slurry;
The auxiliary agents include one or more of a binder, a dispersant, or a conductive agent. The negative active material of this application does not need special treatment, and can be simply mixed with other constituents such as auxiliary agents and solvent to form a negative electrode slurry, and then a negative electrode plate can be produced by coating, drying, and pressing in conventional processes. The preparation method is simple and facilitates mass production in industrial applications.

Further, the binder is one or more selected from polystyrene butadiene, polyvinylidene fluoride, polyacrylic acid, polyacrylonitrile, polyvinyl alcohol (PVA), carboxymethyl chitosan, or sodium alginate.

Further, the mass percent of the binder in the negative electrode slurry is 0.5% to 5%.

Further, the dispersant is one or more selected from carboxymethyl cellulose, sodium carboxymethyl cellulose, or a positive temperature coefficient (PTC) thermistor material.

Further, the mass percent of the dispersant in the negative electrode slurry is 0% to 3%.

Further, the conductive agent is one or more selected from graphite, superconductive carbon, acetylene black, carbon black, Ketjen black, carbon dots, carbon nanotubes, graphene, carbon nanofibers, or a porous carbon material.

Further, the mass percent of the conductive agent in the negative electrode slurry is 0% to 4%.

According to a second aspect, this application provides a battery module. The battery module includes the secondary battery disclosed in the preceding embodiment.

According to a third aspect, this application provides a battery pack. The battery pack includes the battery module disclosed in the preceding embodiment.

According to a fourth aspect, this application provides an electrical device. The electrical device includes one or more of the secondary battery disclosed in the preceding embodiment, the battery module disclosed in the preceding embodiment, or the battery pack disclosed in the preceding embodiment.

Next, a secondary battery, a battery module, a battery pack, and an electrical device according to this application are described below in detail with due reference to drawings.

In an embodiment of this application, a secondary battery is provided.

Generally, the secondary battery includes a positive electrode plate, a negative electrode plate, an electrolyte, and a separator. In a charge-and-discharge cycle of the battery, active ions are shuttled between the positive electrode plate and the negative electrode plate by intercalation and deintercalation. The electrolyte serves to conduct ions between the positive electrode plate and the negative electrode plate. Disposed between the positive electrode plate and the negative electrode plate, the separator primarily serves to prevent a short circuit between the positive electrode plate and the negative electrode plate while allowing passage of ions.

### [Positive electrode plate]

The positive electrode plate includes a positive current collector and a positive electrode film layer that overlays at least one surface of the positive current collector. The positive electrode film layer includes a positive active material according to the first aspect of this application.

As an example, the positive current collector includes two surfaces opposite to each other in a thickness direction of the positive current collector. The positive electrode film layer is disposed on either or both of the two opposite surfaces of the positive current collector.

In some embodiments, the positive current collector may be a metal foil or a composite current collector. For example, the metal foil may be an aluminum foil. The composite current collector may include a polymer material substrate and a metal layer formed on at least one surface of the polymer material substrate. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the positive active material may be a positive active material that is well known for use in a battery in the art. As an example, the positive active material may include at least one of the following materials: olivine-structured lithium-containing phosphate, lithium transition metal oxide, and a modified compound thereof. However, this application is not limited to such materials, and other conventional materials usable as a positive active material of a battery may be used instead. Of such positive active materials, one may be used alone, or at least two may be used in combination. Examples of the lithium transition metal oxide may include, but without being limited to, at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (briefly referred to as NCM333), LiNi_{0.5}Co_{0.2}Mn_{0.3}O₂ (briefly referred to as NCM523), LiNi_{0.5}Co_{0.25}Mn_{0.25}O₂ (briefly referred to as NCM211), LiNi_{0.6}Co_{0.2}Mn_{0.2}O₂ (briefly referred to as NCM622), LiNi_{0.8}Co_{0.1}Mn_{0.1}O₂ (briefly referred to as NCM811)), lithium nickel cobalt aluminum oxide (such as LiNi_{0.85}Co_{0.15}Al_{0.05}O₂), or a modified compound thereof. Examples of the olivine-structured lithium-containing phosphate may include, but without being limited to, at least one of lithium iron phosphate (such as LiFePO₄ (briefly referred to as LFP)), a composite of lithium iron phosphate and carbon, lithium manganese phosphate (such as LiMnPO₄), a composite of lithium manganese phosphate and carbon, lithium manganese iron phosphate, or a composite of lithium manganese iron phosphate and carbon.

In some embodiments, the positive electrode film layer further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, the positive electrode film layer further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive electrode slurry, coating a positive current collector with the positive electrode slurry, and performing steps such as drying and cold pressing to obtain the positive electrode plate.

### [Negative electrode plate]

The negative electrode plate includes a negative current collector and a negative electrode film layer disposed on at least one surface of the negative current collector. The negative electrode film layer includes a negative active material.

As an example, the negative current collector includes two surfaces opposite to each other in a thickness direction of the negative current collector. The negative electrode film layer is disposed on either or both of the two opposite surfaces of the negative current collector.

In some embodiments, the negative current collector may be a metal foil or a composite current collector. For example, the metal foil may be a copper foil. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the negative active material is the negative active material disclosed in any one of the embodiments of this application.

In some embodiments, the negative electrode film layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

In some embodiments, the negative electrode film layer further optionally includes a conductive agent. The conductive agent may be at least one selected from superconductive carbon, acetylene black, carbon black, Ketjen black, carbon dots, carbon nanotubes, graphene, or carbon nanofibers.

In some embodiments, the negative electrode film layer further optionally includes other agents, such as a thickener (for example, sodium carboxymethyl cellulose (CMC-Na)).

In some embodiments, the negative electrode plate may be prepared according to the following method: dispersing the ingredients of the negative electrode plate such as the negative active material, the conductive agent, and the binder and any other ingredients in a solvent (such as deionized water) to form a negative electrode slurry, coating a negative current collector with the negative electrode slurry, and performing steps such as drying and cold calendering to obtain the negative electrode plate.

### [Electrolyte]

The electrolyte serves to conduct ions between the positive electrode plate and the negative electrode plate. The type of the electrolyte is not particularly limited in this application, and may be selected as required. For example, the electrolyte may be in a liquid state or gel state, or all solid state.

In some embodiments, the electrolyte is an electrolyte solution. The electrolyte solution includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane.

In some embodiments, the electrolyte solution further optionally includes an additive. For example, the additive may include a negative electrode film-forming additive or a positive electrode film-forming additive. The additive may further include an additive capable of improving specified performance of the battery, for example, an additive for improving overcharge performance of the battery, or an additive for improving high- or low-temperature performance of the battery.

### [Separator]

In some embodiments, the electrode assembly includes a separator located between the positive electrode plate and the negative electrode plate.

In some embodiments, the secondary battery further includes a separator. The separator is located between the positive electrode plate and the negative electrode plate.

The type of the separator is not particularly limited in this application, and may be any well-known porous separator that is highly stable both chemically and mechanically.

In some embodiments, the separator may be made of a material that is at least one selected from glass fiber, non-woven fabric, polyethylene, polypropylene, and polyvinylidene difluoride. The separator may be a single-layer film or a multilayer composite film, without being particularly limited. When the separator is a multilayer composite film, materials in different layers may be identical or different, without being particularly limited.

In some embodiments, the positive electrode plate, the negative electrode plate, and the separator may be made into an electrode assembly by winding or stacking.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

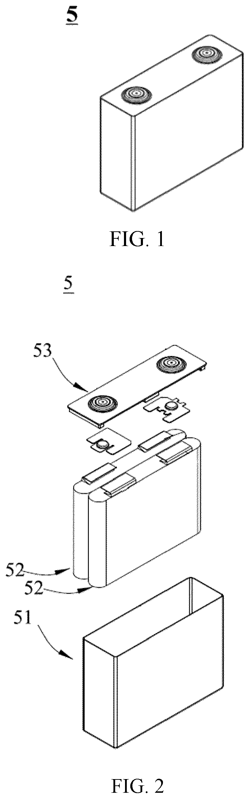

The shape of the secondary battery is not particularly limited in this application, and may be cylindrical, prismatic or any other shape. FIG. 1 shows a prismatic secondary battery 5 as an example.

In some embodiments, referring to FIG. 2, the outer package may include a housing 51 and a cap plate 53. The housing 51 may include a bottom plate and a side plate connected to the bottom plate. The bottom plate and the side plate close in to form an accommodation cavity. An opening that communicates with the accommodation cavity is created on the housing 51. The cap plate 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 in a secondary battery 5 may be one or more, and may be selected by a person skilled in the art as actually required.

In some embodiments, the secondary battery may be assembled into a battery module. The battery module may include one or more secondary batteries, and the specific number of secondary batteries in a battery module may be selected by a person skilled in the art depending on practical applications and capacity of the battery module.

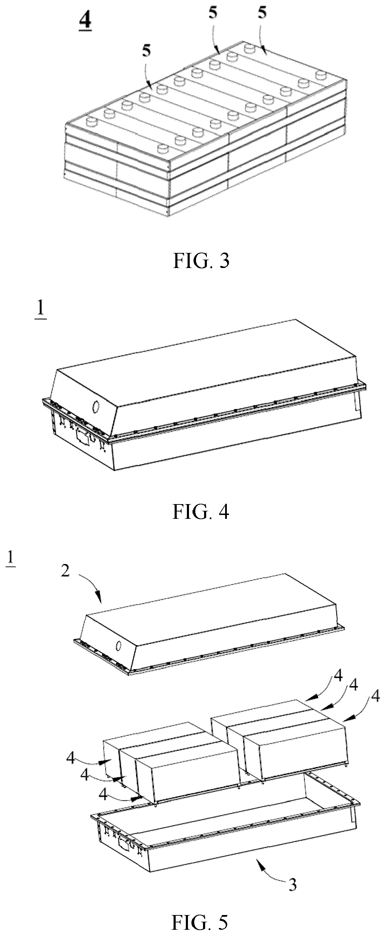

FIG. 3 shows a battery module 4 as an example. Referring to FIG. 3, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

In some embodiments, the battery module may be assembled to form a battery pack. The battery pack may include one or more battery modules, and the specific number of battery modules in a battery pack may be selected by a person skilled in the art depending on practical applications and capacity of the battery pack.

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

Further, this application provides an electrical device. The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

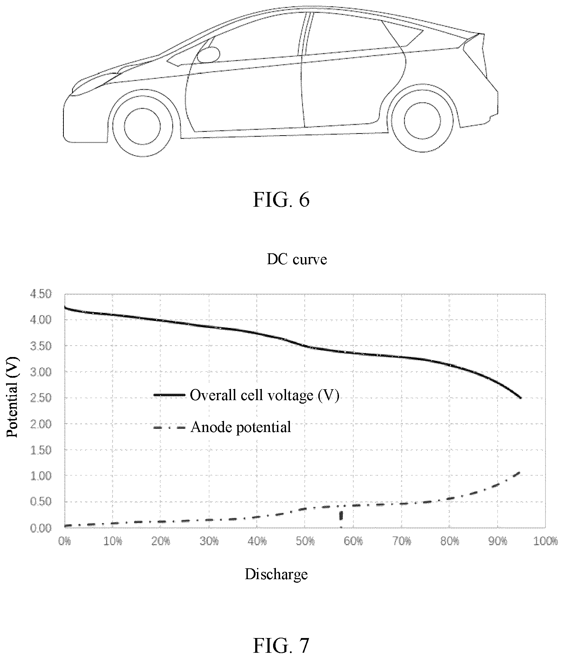

FIG. 6 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the device may be a mobile phone, a tablet computer, a notebook computer, or the like. The device is generally required to be thin and light, and may have a secondary battery as a power supply.

The following describes some embodiments of this application. The embodiments described below are illustrative, and are merely intended to construe this application but not to limit this application. Unless techniques or conditions are expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

### Embodiment 1

(1) Adding, in a 100 L agitation tank, artificial graphite, hard carbon, prelithiated SiOₓ (0 < x < 2), a conductive agent (conductive carbon black Super-P and carbon nanotubes), a binder styrene-butadiene rubber, and a thickener sodium carboxymethylcellulose, where the mass ratio between the artificial graphite, the hard carbon, the prelithiated SiOₓ, the conductive agent Super-P, the carbon nanotubes, the binder styrene-butadiene rubber, and the thickener sodium carboxymethyl cellulose is 43.245: 38.44: 14.415: 0.2: 0.5: 2: 1.2. Adding a specified amount of water solvent, and stirring well to obtain a negative electrode slurry in which the solid content is 50%. Applying, with an extrusion coating machine, the negative electrode slurry prepared above onto both surfaces of the negative current collector at a coating area density of 9.7 mg/cm². Drying the electrode plate in an oven after completion of the coating, and then compacting the electrode plate in a cold-pressing roller to obtain a negative electrode plate. The thickness of the single-side negative active material layer formed after drying and compaction of the negative electrode slurry is 75 µm.The compaction density of the negative electrode plate is 1.3 g/cm³. The porosity of the negative electrode plate is 45%.
   The volume median diameter D_{V50} of the artificial graphite is 14 µm, and the graphitization degree of the artificial graphite is 95%. The volume median diameter D_{V50} of the hard carbon is 5 µm, and D_{V50} of the prelithiated SiOₓ is 8 µm.
(2) Mixing well LiNi_{0.8}Co_{0.1}Mn_{0.1}O₂ (NCM811) as a positive active material, Super P as a conductive agent, and polyvinylidene difluoride (PVDF) as a binder at a mass ratio of 97: 1.5: 1.5 in an appropriate amount of N-methyl-pyrrolidone (NMP) solvent to form a uniform positive electrode slurry. Coating a surface of a positive current collector aluminum foil with the positive electrode slurry, and drying and cold-pressing the foil to obtain a positive electrode plate. Of the positive electrode film, the area density is 24 mg/cm², and the compaction density is 3.4 g/cm³.
(3) Preparing an electrolyte solution
   Mixing ethylene carbonate (EC), ethyl methyl carbonate (EMC), and diethyl carbonate (DEC) at a volume ratio of 4: 3: 3, and dissolving LiPF₆ in the forgoing solution homogeneously to obtain an electrolyte solution, in which the concentration of LiPF₆ is 1 mol/L.
(4) Preparing a secondary battery
   Stacking the positive electrode plate prepared in step (2), a PE separator, and the negative electrode plate prepared in step (1) sequentially, and winding the stacked structure to obtain an electrode assembly. Placing the electrode assembly into an outer package, injecting the electrolyte solution prepared in step (3), and performing conventional steps such as sealing, standing, chemical formation, and aging to obtain a secondary battery.

### Embodiment 2

Substantially identical to Embodiment 1 except that the constituents of the negative active material and the mass ratio thereof are:

Artificial graphite: hard carbon: prelithiated SiOₓ: conductive agent SP: carbon nanotubes: binder styrene-butadiene rubber: thickener sodium carboxymethyl cellulose = 9.61: 72.075: 14.415: 0.2: 0.5: 2: 1.2.

In this embodiment, the thickness of the negative active material layer formed after drying and compaction of the negative electrode slurry is 88 µm, the compaction density of the negative electrode plate is 1.1 g/cm³, and the porosity of the negative electrode plate is 42%.

### Embodiment 3

Substantially identical to Embodiment 1 except that the constituents of the negative active material and the mass ratio thereof are:

Artificial graphite: hard carbon: prelithiated SiOₓ: conductive agent SP: carbon nanotubes: binder styrene-butadiene rubber: thickener sodium carboxymethyl cellulose = 72.075: 9.61: 14.415: 0.2: 0.5: 2: 1.2.

In this embodiment, the thickness of the negative active material layer formed after drying and compaction of the negative electrode slurry is 65 µm, the compaction density of the negative electrode plate is 1.5 g/cm³, and the porosity of the negative electrode plate is 32%.

### Embodiment 4

Substantially identical to Embodiment 1 except that the constituents of the negative active material and the mass ratio thereof are:

Artificial graphite: hard carbon: prelithiated SiOₓ: conductive agent SP: carbon nanotubes: binder styrene-butadiene rubber: thickener sodium carboxymethyl cellulose = 78.802: 9.61: 7.688: 0.2: 0.5: 2: 1.2.

In this embodiment, the thickness of the negative active material layer formed after drying and compaction of the negative electrode slurry is 63 µm, the compaction density of the negative electrode plate is 1.55 g/cm³, and the porosity of the negative electrode plate is 30%.

### Embodiment 5

Substantially identical to Embodiment 1 except that the amorphous carbon in the negative active material is soft carbon.

### Embodiment 6

Substantially identical to Embodiment 1 except that the positive electrode plate in this embodiment is doped with a lithium supplement additive Li₂NiO₂, with an N/P ratio being 1.05.

### Embodiment 7

The preparation process is identical to that in Embodiment 1 except that the constituents of the negative active material and the mass ratio thereof are:

Natural graphite: porous carbon material: tin-based negative electrode: conductive agent SP: carbon nanotubes: binder styrene-butadiene rubber: thickener sodium carboxymethylcellulose = 72.075: 19.22: 4.805: 0.2: 0.5: 2: 1.2.

In this embodiment, the thickness of the negative active material layer formed after drying and compaction of the negative electrode slurry is 57 µm, the compaction density of the negative electrode plate is 1.7 g/cm³, and the porosity of the negative electrode plate is 28%.

The volume median diameter D_{V50} of the natural graphite is 20 µm, and the graphitization degree of the natural graphite is 95%. The volume median diameter D_{V50} of the porous carbon is 6 µm, and D_{V50} of the tin-based negative electrode material is 10 µm.

The positive electrode material is lithium-rich manganese-based lithium manganese oxide.

### Comparative Embodiment 1

Substantially identical to Embodiment 1 except that the constituents of the negative active material and the mass ratio thereof are:

Artificial graphite: hard carbon: prelithiated SiOₓ: conductive agent SP: carbon nanotubes: binder styrene-butadiene rubber: thickener sodium carboxymethyl cellulose = 89.5: 4.6: 2: 0.2: 0.5: 2: 1.2.

In this comparative embodiment, the thickness of the negative active material layer formed after drying and compaction of the negative electrode slurry is 63 µm, the compaction density of the negative electrode plate is 1.55 g/cm³, and the porosity of the negative electrode plate is 20%.

### Comparative Embodiment 2

Substantially identical to Embodiment 1 except that the constituents of the negative active material and the mass ratio thereof are:

Artificial graphite: hard carbon: prelithiated SiOₓ: conductive agent SP: carbon nanotubes: binder styrene-butadiene rubber: thickener sodium carboxymethyl cellulose = 14.415: 43.245: 38.44: 0.2: 0.5: 2: 1.2.

In this comparative embodiment, the thickness of the negative active material layer formed after drying and compaction of the negative electrode slurry is 63 µm, the compaction density of the negative electrode plate is 1.55 g/cm³, and the porosity of the negative electrode plate is 70%.

### Comparative Embodiment 3

Substantially identical to Embodiment 1 except that the constituents of the negative active material and the mass ratio thereof are:

Artificial graphite: hard carbon: prelithiated SiOₓ: conductive agent SP: carbon nanotubes: binder styrene-butadiene rubber: thickener sodium carboxymethyl cellulose = 72.075: 4.805: 19.22: 0.2: 0.5: 2: 1.2.

In this comparative embodiment, the thickness of the negative active material layer formed after drying and compaction of the negative electrode slurry is 63 µm, the compaction density of the negative electrode plate is 1.55 g/cm³, and the porosity of the negative electrode plate is 23%.

### Comparative Embodiment 4

Substantially identical to Embodiment 1 except that the constituents of the negative active material and the mass ratio thereof are:

Artificial graphite: hard carbon: prelithiated SiOₓ: conductive agent SP: carbon nanotubes: binder styrene-butadiene rubber: thickener sodium carboxymethyl cellulose = 9.61: 81.685: 4.805: 0.2: 0.5: 2: 1.2.

In this comparative embodiment, the thickness of the negative active material layer formed after drying and compaction of the negative electrode slurry is 97 µm, the compaction density of the negative electrode plate is 1 g/cm³, and the porosity of the negative electrode plate is 34%.

### Comparative Embodiment 5

Substantially identical to Embodiment 1 except that the constituents of the negative active material and the mass ratio thereof are:

Artificial graphite: hard carbon: prelithiated SiOₓ: conductive agent SP: carbon nanotubes: binder styrene-butadiene rubber: thickener sodium carboxymethyl cellulose = 81.685: 4.805: 9.61: 0.2: 0.5: 2: 1.2.

In this comparative embodiment, the thickness of the negative active material layer formed after drying and compaction of the negative electrode slurry is 63 µm, the compaction density of the negative electrode plate is 1.55 g/cm³, and the porosity of the negative electrode plate is 22%.

### Comparative Embodiment 6

Substantially identical to Embodiment 1 except that the constituents of the negative active material and the mass ratio thereof are:

Artificial graphite: hard carbon: prelithiated SiOₓ: conductive agent SP: carbon nanotubes: binder styrene-butadiene rubber: thickener sodium carboxymethyl cellulose = 4.805: 86.49: 4.805: 0.2: 0.5: 2: 1.2.

In this comparative embodiment, the thickness of the negative active material layer formed after drying and compaction of the negative electrode slurry is 97 µm, the compaction density of the negative electrode plate is 1 g/cm³, and the porosity of the negative electrode plate is 32%.

### Comparative Embodiment 7

Substantially identical to Embodiment 6 except that the dosage of the lithium supplement additive is adjusted so that the N/P ratio is 0.98.

### Comparative Embodiment 8

Substantially identical to Embodiment 6 except that the dosage of the lithium supplement additive is adjusted so that the N/P ratio is 1.25.

### Characterization Test

Performing the following characterization tests on the lithium-ion batteries prepared in each embodiment and each comparative embodiment described above:
(1) Film thickness: In this application, the thickness of the negative electrode film bears a meaning well known in the art, and may be measured by a method known in the art, for example, by using a ten-thousandth micrometer (such as Mitutoyo 293-100, accurate to within 0.1 µm).
(2) Thicknesses of a double-side-coated film: In this application, the thickness of the first negative electrode film layer and the thickness of the second negative electrode film layer may be measured by using a scanning electron microscope (such as ZEISS Sigma 300). The specimen is prepared in the following process: First, cutting a negative electrode plate into a specimen of a given size (for example, 2 cm × 2 cm), and fixing the negative electrode plate onto a specimen holder by using paraffin; and then loading the specimen holder onto the specimen rack and locking the rack, powering on an argon ion cross-section polisher (such as IB-19500CP) and performing vacuumizing (for example, at a pressure of 10⁻⁴ Pa), setting the argon flow (such as 0.15 MPa), voltage (such as 8 KV), and polishing duration (such as 2 hours), and adjusting the specimen holder to a wobble mode to start polishing. For details of the specimen test procedure, refer to JY/T010-1996. To ensure accuracy of test results, a plurality of (for example, 10) different regions may be selected randomly from a specimen for scanning. The thicknesses of the first negative electrode film layer and the second negative electrode film layer in a scale measurement region are read at a given magnification (such as 500×). The test results of a plurality of measurement regions are averaged out to be the thicknesses of the first negative electrode film layer and the second negative electrode film layer.
(3) Mass percent of the silicon-based material: In this application, the mass percent of the silicon-based material in the negative electrode film layer bears a meaning well known in the art, and may be measured by a method known in the art. For example, a cross-section of the negative electrode film (such as a cross section in the thickness direction of the film) is observed in a scanning electron microscope (such as ZEISS Sigma 300), and quantitative mapping is performed by energy dispersive X-ray spectroscopy EDS (such as an EDS spectrometer built in the ZEISS Sigma 300 instrument). In this way, the element content of the negative electrode film is determined by measuring the scanned position of the cross-section, so as to determine the element distribution. In a region in the cross-section, the Si content in the region may be obtained by integrating the Si element distribution. To improve the accuracy of the test, the test results of several regions (for example, 10 regions) may be acquired and averaged out.
(4) Particle diameter: In this application, the particle diameter of the silicon-based material bears a meaning known in the art and may be measured by a method known in the art. For example, the particle diameter may be measured by a scanning electron microscope (such as ZEISS Sigma 300). The specimen is prepared in the following process: First, cutting a negative electrode plate into a specimen of a given size (for example, 2 cm × 2 cm), and fixing the negative electrode plate onto a specimen holder by using paraffin; and then loading the specimen holder onto the specimen rack and locking the rack, powering on an argon ion cross-section polisher (such as IB-19500CP) and performing vacuumizing (for example, at a pressure of 10⁻⁴ Pa), setting the argon flow (such as 0.15 MPa), voltage (such as 8 KV), and polishing duration (such as 2 hours), and adjusting the specimen holder to a wobble mode to start polishing. For details of the specimen test procedure, refer to JY/T010-1996. To ensure accuracy of test results, a plurality of (for example, 10) different regions may be selected randomly from a specimen for scanning. The particle diameters of all the silicon-based materials in a scale measurement region are read at a given magnification (such as, 500×). To further improve the accuracy of measurement, the test results of a plurality of regions may be acquired and averaged out.
In this application, the volume median diameter Dᵥ₅₀ of the negative active material bears a meaning known in the art, and may be determined by an instrument and method known in the art. For example, the volume median diameter is determined by using a laser particle size analyzer (such as Malvern Mastersizer 3000) with reference to the standard GB/T 19077.1-2016. D_{V50} is a particle diameter corresponding to a 50% cumulative volume distribution percent in a volume-based particle size distribution curve of the negative active material.
(5) Area density of the negative electrode film: In this application, the area density of the negative electrode film bears a meaning known in the art, and may be measured by a method known in the art. An exemplary test method includes: Taking a single-side-coated and cold-pressed negative electrode plate (in a case of a double-side-coated negative electrode plate, just wiping off the negative electrode film on one side first), and die-cutting the electrode plate into small discs serving as specimens, denoting the area of each specimen as S₁, weighing the specimen, and recording the weight as Mi; subsequently, wiping off the negative electrode film of the weighed negative electrode plate, weighing the negative current collector, and recording the net weight as M₀; and calculating the area density of the negative electrode film as: area density = (Mi - M₀)/S₁, where Mi is the weight of the negative electrode plate, and M₀ is the weight of the negative current collector. To ensure accuracy of the test results, 10 groups of specimens may be measured, and then the measurement results may be averaged out.
In this application, the compaction density of the negative electrode film bears a meaning known in the art, and may be measured by a method known in the art. Compaction density of the negative electrode film = area density of the negative electrode film/thickness of the negative electrode film.
(6) Testing the fast-charge capabilities of the battery
Performing a first charge-and-discharge cycle at a temperature of 25 °C and a C-rate of 1 C (that is, a current value by which the nominal capacity of the battery is fully discharged within 1 hour) on the batteries prepared in each embodiment and each comparative embodiment above, and the detailed cycling steps include: charging a battery at a constant current of 1 C until the voltage reaches 4.25 V, and then charging the battery at a constant voltage until the current is less than or equal to 0.05 C; leaving the battery to stand for 5 minutes; discharging the battery at a constant current of 0.33 C until the voltage reaches 2.5 V, and recording the actual capacity of the battery as C₀;
subsequently, charging the battery at a constant current of 1.0 C₀, 1.3 C₀, 1.5 C₀, 1.8 C₀, 2.0 C₀, 2.3 C₀, 2.5 C₀, 3.0 C₀ separately until a full-cell charge cut-off voltage of 4.25 V or a negative electrode cut-off potential of 0 V (whichever is reached first); discharging, upon completion of each charge stage, the battery at a current of 1 C₀ until the full-cell discharge cut-off voltage of 2.8 V; recording the anode potentials corresponding to the SOC (State of Charge, State of Charge) of 10%, 20%, 30%,..., 80% reached by charging at different charge rates; plotting a charge-rate vs anode-potential curve with varying SOC values; performing linear fitting to obtain the charge rates corresponding to different SOC values when the anode potential reaches 0 V, where the charge rates form a charge window for the battery to reach such SOC values, and are recorded as C_{10%SOC}, C_{20%SOC}, C_{30%SOC}, C_{40%SOC}, C_{50%SOC}, C_{60%SOC}, C_{70%SOC}, and C_{80%SOC}, respectively; and calculating a charge time T (min) spent for the battery to reach 80% SOC from 10%SOC as: T = (60/C_{20%SOC} + 60/C_{30%SOC} + 60/C_{40%SOC} + 60/C_{50%SOC} + 60/C_{60%SOC} + 60/C_{70%SOC} + 60/C_{80%SOC}) × 10%. The shorter the charge time, the higher the fast-charge performance of the battery.

(7) Testing the cycle performance of the battery
Charging the secondary battery in each embodiment and each comparative embodiment at a constant current of 1 C at 25 °C until a charge cut-off voltage 4.25 V, and then charging the battery at a constant voltage until the current is less than or equal to 0.05 C. Leaving the battery to stand for 5 minutes, and then discharging the battery at a constant current of 1 C until a discharge cut-off voltage 2.5 V. Leaving the battery to stand for 5 minutes, thereby completing one charge-and-discharge cycle. Repeating the above method to test the battery for a number of cycles until the capacity of the battery fades to 80%. The number of cycles at this time is the cycle life of the battery cycled at 25 °C.
(8) C₁/Cₛᵤₘ: Assembling the negative electrode plate and a lithium sheet into a button half-cell, and charging and discharging the half-cell at a 0.04 C rate, during which the charge cut-off voltage is 1.2 V and the discharge cut-off voltage is 0 V; plotting a charge-and-discharge curve based on the charge and discharge data, calculating a total gravimetric discharge capacity (Cₛᵤₘ) during the cycle and a gravimetric capacity in a first charge stage (C₁) based on the charge-and-discharge curve, and then calculating a C₁/Cₛᵤₘ ratio.
(9) N/P: Combining a positive electrode plate with a lithium sheet to form a button half-cell of a positive electrode plate, and combining a negative electrode plate with a lithium sheet to form a button half-cell of a negative electrode plate. Charging and discharging the half-cells for a first cycle at a C-rate of 0.04 C to obtain a first-cycle gravimetric charge capacity of the positive electrode plate and a first-cycle gravimetric charge capacity of the negative electrode plate respectively, during which the charge cut-off voltage of the button half-cell of a positive electrode plate is 4.3V, the discharge cut-off voltage of the button half-cell of a positive electrode plate is 2.5 V, the charge cut-off voltage of the button half-cell of a negative electrode plate is 1.2 V, and the discharge cut-off voltage of the button half-cell of a negative electrode plate is 0 V.
(10) Energy density: Determining the volume of a battery cell. For a prismatic cell, calculating the volume based on the dimensions of length, width and height; for a cylindrical cell, calculating the volume based on the height and diameter; and, for a pouch-type cell, obtaining the volume of the battery cell by a drainage method. Subsequently, performing charge and discharge on the battery cells with a charger/discharger at 25 °C and a C-rate of 0.33 C, and recording the value of discharge energy. Dividing the discharge energy by the volume of the battery cell to obtain the volumetric energy density of the battery cell.

**Table 1**

| | x | y | z | C₁/Cₛᵤₘ | N/P | Fast-charge performance (min) | Energy density (Wh/kg) | Cycle performance (els) | Full-charge expansion rebound rate (%) |
|---|---|---|---|---|---|---|---|---|---|
| Embodiment 1 | 0.45 | 0.15 | 0.4 | 35% | 1.05 | 14 | 250 | 1400 | 30 |
| Embodiment 2 | 0.1 | 0.15 | 0.75 | 40% | 1.05 | 12 | 240 | 1200 | 26 |
| Embodiment 3 | 0.75 | 0.15 | 0.1 | 8.8% | 1.05 | 15 | 253 | 1200 | 35 |
| Embodiment 4 | 0.82 | 0.10 | 0.08 | 8% | 1.05 | 15.5 | 245 | 1200 | 30 |
| Embodiment 5 | 0.45 | 0.15 | 0.4 | 35% | 1.05 | 14 | 250 | 1400 | 25 |
| Embodiment 6 | 0.45 | 0.15 | 0.4 | 35% | 1.05 | 14 | 252 | 1200 | 25 |
| Embodiment 7 | 0.75 | 0.05 | 0.20 | 13% | 1.02 | 15 | 258 | 1800 | 22 |
| Comparative Embodiment 1 | 0.93 1 | 0.048 | 0.021 | 1% | 1.05 | 20 | 243 | 1000 | 24 |
| Comparative Embodiment 2 | 0.15 | 0.51 | 0.34 | 8% | 1.05 | 19 | 250 | 600 | 45 |
| Comparative Embodiment 3 | 0.75 | 0.20 | 0.05 | 2% | 1.05 | 18 | 242 | 1000 | 42 |
| Comparative Embodiment 4 | 0.10 | 0.05 | 0.85 | 45% | 1.05 | 17 | 235 | 1100 | 17 |
| Comparative Embodiment 5 | 0.85 | 0.10 | 0.05 | 2% | 1.05 | 19 | 245 | 1100 | 30 |
| Comparative Embodiment 6 | 0.05 | 0.05 | 0.90 | 55% | 1.05 | 16 | 231 | 1000 | 16 |
| Comparative Embodiment 7 | 0.45 | 0.15 | 0.40 | 20% | 0.98 | 20 | 260 | 800 | 30 |
| Comparative Embodiment 8 | 0.45 | 0.15 | 0.40 | 35% | 1.25 | 16 | 238 | 1200 | 25 |

As can be seen from Table 1, after the negative active material prepared in each embodiment of this application is made into a battery, the battery exhibits good fast-charge performance and cycle performance, a high energy density, and a low full-charge expansion rebound rate. Especially, in Embodiment 1 in which all parameter values fall within the preferred value ranges, the battery exhibits the best overall performance.

In contrast to Embodiment 1, the value of y in Comparative Embodiment 1 is unduly small, thereby making the C₁/Cₛᵤₘ ratio unduly low, and therefore, the cycle performance, energy density, and fast-charge performance decline significantly. In Comparative Embodiment 2, the value of y is unduly large, and the cycle performance declines drastically, and the full-charge expansion rebound rate increases significantly. In Comparative Embodiment 3, the value of z is unduly small, and is lower than the lower limit of 0.062x+0.263y, and therefore, the C₁/Cₛᵤₘ ratio is too small, the fast-charge performance declines, the energy density and the number of cycles also decrease, and the full-charge expansion rebound rate increases. In Comparative Embodiment 4, the value of z is unduly large and is higher than the upper limit of 1.18x+5y, and therefore, although the full-charge expansion rebound rate decreases, the fast-charge performance, energy density, and number of cycles all decline. In Comparative Embodiment 5, the C₁/Cₛᵤₘ ratio is unduly low, and therefore, the energy density declines slightly, and the fast-charge performance and number of cycles decrease significantly. In Comparative Embodiment 6, the C₁/Cₛᵤₘ ratio is unduly high, and therefore, the energy density and cycle performance decline significantly. In Comparative Embodiment 7, the N/P ratio is unduly low, and therefore, although the energy density increases to some extent, the fast-charge performance declines, and especially, the cycle performance declines significantly. In Comparative Embodiment 8, the N/P ratio is unduly high, and therefore, although the fast-charge performance and the full-charge expansion rebound rate are not much changed, both the energy density and the cycle performance decline to some extent.

The technical features in the foregoing embodiments may be combined arbitrarily. For brevity, not all possible combinations of the technical features in the embodiments are described. However, to the extent that no conflict exists, all such combinations of the technical features are considered falling within the scope hereof.

The foregoing embodiments merely describe several implementations of this application. The description is relatively detailed, but constitutes no limitation on the patent scope hereof. It is hereby noted that several variations and improvements, which may be made to the embodiments by a person of ordinary skill in the art without departing from the concept of this application, fall within the protection scope of this application. Therefore, the protection scope of this application is subject to the claims appended hereto, and the specification and the accompanying drawings may be used for interpreting the protection scope of the claims.

## Claims

1. A secondary battery, comprising:
a positive electrode plate;
a negative electrode plate; and
a separator, disposed between the positive electrode plate and the negative electrode plate, wherein
the negative electrode plate comprises a negative current collector and a negative active material layer disposed on at least one surface of the negative current collector; a negative active material in the negative active material layer comprises graphite, amorphous carbon, and a non-carbon negative electrode material; the amorphous carbon comprises one or more of hard carbon, soft carbon, or porous carbon; and the non-carbon negative electrode material is a silicon-based negative electrode material and/or a tin-based negative electrode material.

2. The secondary battery according to claim 1, **characterized in that**, in the negative active material, a mass percent of the graphite is x, a mass percent of the amorphous carbon is y, a mass percent of the non-carbon negative electrode material is z, and x, y, and z satisfy the following relationship: 0.062x + 0.263y ≤ z ≤ 1.18x + 5y.

3. The secondary battery according to claim 2, **characterized in that** x, y, and z satisfy the following relationship: 0.08x + 0.4y ≤ z ≤ 1x + 4y.

4. The secondary battery according to any one of claims 2 to 3, **characterized in that** x, y, and z satisfy the following relationship: x + y + z = 1.

5. The secondary battery according to any one of claims 2 to 4, **characterized in that** a value range of y is 5% to 50%.

6. The secondary battery according to any one of claims 1 to 5, **characterized in that** a lithiation capacity of the amorphous carbon in a first charge stage is C₁, a lithiation capacity of the negative active material in an entire charge process is Cₛᵤₘ, and a value range of a C₁/Cₛᵤₘ ratio is 5% to 50%; and
the first charge stage means a charge stage in which a lithiation potential of the amorphous carbon is greater than a lithiation potential of the graphite, and in which the lithiation potential of the amorphous carbon is greater than a lithiation potential of the non-carbon negative electrode material.

7. The secondary battery according to claim 6, **characterized in that** a value range of the C₁/Cₛᵤₘ ratio is 10% to 35%.

8. The secondary battery according to any one of claims 1 to 7, **characterized in that** the hard carbon comprises one or more of resin carbon or carbon black.

9. The secondary battery according to any one of claims 1 to 8, **characterized in that** the soft carbon comprises one or more of mesocarbon microbeads, coke, or carbon fibers.

10. The secondary battery according to any one of claims 1 to 9, **characterized in that** the silicon-based negative electrode material comprises one or more of elemental silicon, a silicon-oxygen compound, a silicon-nitrogen composite, or silicon alloy.

11. The secondary battery according to any one of claims 1 to 10, **characterized in that** a volume median diameter D_{V50} of the graphite falls within a range of 5 µm to 25 µm.

12. The secondary battery according to any one of claims 1 to 11, **characterized in that** a graphitization degree of the graphite is 88% to 99%.

13. The secondary battery according to any one of claims 1 to 12, **characterized in that** a D_{V50} particle diameter of the amorphous carbon falls within a range of 2 µm to 10 µm.

14. The secondary battery according to any one of claims 1 to 13, **characterized in that** a D_{V50} particle diameter of the non-carbon negative electrode material falls within a range of 0.05 µm to 20 µm.

15. The secondary battery according to claims 1 to 14, **characterized in that** a mass percent of the negative active material in the negative active material layer is 92% to 99%.

16. The secondary battery according to any one of claims 1 to 15, **characterized in that** a thickness of the negative active material layer is 30 µm to 100 µm.

17. The secondary battery according to any one of claims 1 to 16, **characterized in that** a compaction density of the negative electrode plate is 1 g/cm³ to 1.7 g/cm³.

18. The secondary battery according to any one of claims 1 to 17, **characterized in that** a porosity of the negative electrode plate is 20% to 60%.

19. The secondary battery according to any one of claims 1 to 18, **characterized in that** a porosity of the negative electrode plate is 30% to 55%.

20. The secondary battery according to any one of claims 1 to 19, **characterized in that** a full-charge expansion rebound rate of the negative electrode plate is 20% to 50%.

21. The secondary battery according to any one of claims 1 to 20, **characterized in that** an end-of-discharge anode potential of the negative electrode plate is greater than or equal to 0.6 V, and a discharge curve comprises 2 or more voltage plateaus.

22. The secondary battery according to any one of claims 1 to 21, **characterized in that** the positive electrode plate comprises a positive active material and a lithium supplement additive; the positive active material comprises one or more of lithium nickel cobalt manganese oxide, lithium manganese oxide, lithium iron phosphate, lithium-rich lithium manganese oxide, or lithium cobalt oxide; and the lithium supplement additive comprises one or more of Li_{7/3}Ti_{5/3}O₄, Li_{2.3}Mo₆S_{7.7}, Li₂NiO₂, Li₂CuO₂, Li₆CoO₄, Li5FeO₄, Li₆MnO₄, Li₂MoO₃, Li₃N, Li₂O, LiOH, or Li₂CO₃.

23. The secondary battery according to any one of claims 1 to 22, **characterized in that**, in the secondary battery, a ratio of a coating amount of a negative electrode material per unit area to a coating amount of a positive electrode material per unit area is denoted as N/P, and a value range of the N/P ratio is 0.99 to 1.2.

24. A battery module, **characterized in that** the battery module comprises the secondary battery according to any one of claims 1 to 23.

25. A battery pack, **characterized in that** the battery pack comprises the battery module according to claim 24.

26. An electrical device, **characterized in that** the electrical device comprises one or more of: the secondary battery according to any one of claims 1 to 23; the battery module according to claim 24; or, the battery pack according to claim 25.
